# FASCICULE DE BREVET EUROPEEN

(11) **EP 3 699 401 B1**
(45) Date de publication et mention de la délivrance du brevet: **21.07.2021**
(21) Numéro de dépôt: 20157210.4
(22) Date de dépôt: 13.02.2020
(51) Int. Cl.: F01D 11/24, F01D 25/28, F01D 25/14, F01D 25/12

(54) **DISPOSITIF DE MAINTIEN D'AU MOINS UN TUBE DE REFROIDISSEMENT À UN CARTER DE TURBOMACHINE ET SON PROCÉDÉ DE MONTAGE**
HALTERUNGSVORRICHTUNG FÜR MINDESTENS EIN KÜHLROHR AN EINEM GEHÄUSE EINES TURBOTRIEBWERKS, UND ZUGEHÖRIGES MONTAGEVERFAHREN
DEVICE FOR ATTACHING AT LEAST ONE COOLING TUBE TO A CASING OF A TURBINE ENGINE AND CORRESPONDING ASSEMBLING METHOD

(30) Priorité: 25.02.2019 FR 1901905
(43) Date de publication de la demande: 26.08.2020
(73) Titulaire: SAFRAN AIRCRAFT ENGINES, 75015 Paris (FR)
(72) Inventeur: EVAIN, Gael Frederic Claude Cyrille, 77550 MOISSY-CRAMAYEL (FR); DROUET, Franck Robert, 77550 MOISSY-CRAMAYEL (FR); LAMBERT, Olivier Arnaud Fabien, 77550 MOISSY-CRAMAYEL (FR); RODRIGUES, Paul Georges, 77550 MOISSY-CRAMAYEL (FR)
(74) Mandataire: Regimbeau

(56) Documents cités:
- FR-A1- 2 995 022
- FR-A1- 3 002 590
- FR-A1- 3 021 700
- FR-A1- 3 040 429

## Description

L'invention concerne un dispositif maintien d'au moins un tube de refroidissement sur un carter de turbomachine, ainsi qu'un procédé de montage de celui-ci.

Un domaine d'application concerne les turboréacteurs d'aéronefs.

Le carter peut être celui d'une turbine basse pression de la turbomachine. Le tube de refroidissement est également appelé rampe de refroidissement. Habituellement, plusieurs tubes de refroidissement sont prévus. Le dispositif de refroidissement est fixé par rapport à la surface externe du carter pour maintenir le ou les tubes de refroidissement autour de celui-ci, de manière à le refroidir d'une manière la plus homogène possible.

Différents dispositifs de maintien de ce type sont connus.

Le document FR-A-3 040 429 concerne un dispositif de fixation comportant un support ayant une tôle intérieure et une tôle extérieure ayant chacune des gorges entourant chacune une moitié de la circonférence des rampes de refroidissement, des zones planes des tôles étant assemblées par des vis sur des éléments de support fixé au carter.

Le document FR-A-2 995 022 concerne un dispositif de fixation comportant une tôle de fixation comportant des décrochements sur lesquels sont fixés des colliers de fixation entourant les tubes de refroidissement.

Le document FR-A-3 021 700 concerne un dispositif de fixation comportant deux platines fixées entre elles par des entretoises définissant entre elles des espacements dans lesquels passent les tubes de refroidissement.

Le document FR-A-3 002 590 concerne un dispositif de fixation comportant une tôle de fixation ayant des ouvertures et des languettes externes sur lesquelles sont fixées des colliers de fixation, les colliers de fixation entourant les tubes de refroidissement et traversant les ouvertures.

D'une manière générale, le dispositif de maintien crée un porte-à-faux sur les tubes de refroidissement, qui doivent être supportés afin de contrôler au mieux l'entrefer entre les tubes de refroidissement et la surface externe du carter sur toute la périphérie de celui-ci.

L'invention vise à obtenir un dispositif maintien d'au moins un tube de refroidissement sur un carter de turbomachine, ainsi qu'un procédé de montage de celui-ci, qui permettent de réduire l'entrefer entre le tube et le carter et d'améliorer le refroidissement.

A cet effet, un premier objet de l'invention est un dispositif de maintien d'au moins un tube de refroidissement par jet d'air, le tube de refroidissement par jet d'air étant destiné à refroidir une surface externe d'un carter de turbomachine,
caractérisé en ce que le dispositif de maintien comporte
un premier support, comportant une première face interne tournée vers le tube de refroidissement et au moins une patte gauche de retenue partielle vers la gauche du tube de refroidissement, située du côté de la première face interne et fixée à celle-ci,
un deuxième support, comportant une deuxième face interne tournée vers le tube de refroidissement et au moins une patte droite de retenue partielle vers la droite du tube de refroidissement, située du côté de la deuxième face interne et fixée à celle-ci,
des premiers moyens de fixation du premier support à une première bride du carter,
des deuxièmes moyens de fixation du deuxième support à une deuxième bride du carter, les deuxièmes moyens de fixation étant distincts des premiers moyens de fixation.

Grâce à l'invention, on élimine la présence de colliers ou de parties passant sous le tube de refroidissement, ce qui permet de réduire l'encombrement sous le tube et de rapprocher le tube par rapport à la surface externe du carter. On parvient ainsi à réduire l'entrefer entre le tube de refroidissement et la surface externe du carter, sans risquer un contact entre les pattes et le carter. En outre, l'invention permet également de réduire la masse totale du dispositif de maintien. L'invention permet également de moins obturer les perçages des tubes envoyant des jets d'air vers la surface externe du carter.

Suivant un mode de réalisation de l'invention, la patte gauche est décalée par rapport à la patte droite suivant une direction longitudinale du tube de refroidissement.

Suivant un mode de réalisation de l'invention, la patte gauche a une partie d'extrémité libre gauche de soutien du tube de refroidissement qui s'étend en oblique vers la droite,
et/ou la patte droite a une partie d'extrémité libre droite de soutien du tube de refroidissement qui s'étend en oblique vers la gauche.

Suivant un mode de réalisation de l'invention, la patte gauche comporte une première partie médiane, qui est raccordée à la première face interne et qui occupe un premier secteur angulaire, le premier secteur angulaire étant disposé en regard du premier support,
la partie d'extrémité libre gauche étant raccordée à la première partie médiane et faisant un deuxième secteur angulaire autour du tube de refroidissement, le deuxième secteur angulaire étant destiné à être disposé en regard de la surface externe du carter,
la patte droite comporte une deuxième partie médiane, qui est raccordée à la deuxième face interne et qui occupe un troisième secteur angulaire, le troisième secteur angulaire étant disposé en regard du deuxième support,
la partie d'extrémité libre droite étant raccordée à la deuxième partie médiane et faisant un quatrième secteur angulaire autour du tube de refroidissement, le quatrième secteur angulaire étant destiné à être disposé en regard de la surface externe du carter.

Suivant un mode de réalisation de l'invention, la partie d'extrémité gauche de la patte gauche et la partie d'extrémité droite de la patte droite comprennent chacune une extrémité libre radialement interne, et le tube comprend une extrémité libre radialement interne, l'extrémité libre radialement interne du tube étant située radialement sous l'extrémité libre radialement interne de chacune des pattes.

Suivant un mode de réalisation de l'invention, le deuxième secteur angulaire autour du tube de refroidissement s'étend de 180° à une valeur maximale d'extrémité inférieure ou égale à 250° et/ou le quatrième secteur angulaire s'étend de 0° à une valeur maximale d'extrémité supérieure ou égale à -55°, les secteurs angulaires étant référencés par rapport à un point du tube, qui est situé du côté du carter et qui est pris à 270°.

Suivant un mode de réalisation de l'invention, le premier support est placé contre le deuxième support suivant une direction longitudinale du tube de refroidissement.

Suivant un mode de réalisation de l'invention, le premier support comporte au moins une première partie de glissière, le deuxième support comporte au moins une deuxième partie de glissière, apte à glisser contre la première partie de glissière le long d'une direction transversale allant entre la droite et la gauche et/ou le long d'une direction longitudinale du tube de refroidissement jusqu'à une position de montage, dans laquelle la patte gauche et la patte droite se trouvent contre respectivement la gauche et la droite du tube de refroidissement, les premiers et deuxièmes moyens de fixation permettant d'immobiliser les premier et deuxième supports dans la position de montage.

Suivant un mode de réalisation de l'invention, le premier support ou le deuxième support comporte au moins une butée d'arrêt de glissement, configurée pour arrêter le glissement du deuxième support ou du premier support suivant la direction transversale dans la position de montage, et/ou le premier support ou le deuxième support comporte au moins une autre butée d'arrêt de glissement, configurée pour arrêter le glissement du deuxième support ou du premier support suivant la direction longitudinale du tube de refroidissement dans la position de montage.

Suivant un mode de réalisation de l'invention, le premier support comporte une pluralité de pattes gauche de retenue partielle vers la gauche de respectivement une pluralité de tubes de refroidissement,
le deuxième support comporte une pluralité de pattes droite de retenue partielle vers la droite de respectivement la pluralité de tubes de refroidissement,
la pluralité de tubes de refroidissement étant réparties entre la droite et la gauche,
les pattes gauches étant réparties entre la droite et la gauche,
les pattes droites étant réparties entre la droite et la gauche.

Suivant un mode de réalisation de l'invention, les pattes gauches de retenue partielle sont réparties l'une derrière l'autre suivant une direction transversale allant entre la droite et la gauche et/ou les pattes droites de retenue partielle sont réparties l'une derrière l'autre suivant la direction transversale.

Suivant un mode de réalisation de l'invention, la première face interne est plane et/ou la deuxième face interne est plane.

Un deuxième objet de l'invention est un procédé de montage d'au moins un tube de refroidissement sur un carter de turbomachine à l'aide du dispositif de maintien tel que décrit ci-dessus,
caractérisé en ce que
au cours d'une première étape, on positionne le au moins un tube de refroidissement autour d'une surface externe du carter de turbomachine,
au cours d'une deuxième étape postérieure à la première étape, on positionne le premier support du dispositif de maintien pour disposer la patte gauche contre la gauche du tube de refroidissement,
au cours d'une troisième étape postérieure à la deuxième étape, on fixe le premier support à une première bride du carter,
au cours d'une quatrième étape postérieure à la troisième étape, on positionne le deuxième support du dispositif de maintien contre le premier support pour disposer la patte droite contre la droite du tube de refroidissement,
au cours d'une cinquième étape postérieure à la quatrième étape, on fixe le deuxième support à une deuxième bride du carter.

L'invention sera mieux comprise à la lecture de la description qui va suivre, donnée uniquement à titre d'exemple non limitatif en référence aux figures des dessins annexés, sur lesquelles :
[Fig. 1] représente schématiquement en coupe axiale un exemple de turbomachine sur laquelle peut être utilisé le dispositif de maintien et le procédé de montage suivant l'invention,
[Fig. 2] représente schématiquement vu depuis l'amont un mode de réalisation d'un dispositif d'envoi d'air, pouvant faire partie de la turbomachine,
[Fig. 3] représente schématiquement en perspective vue de dessus un dispositif de maintien d'au moins un tube de refroidissement suivant un mode de réalisation de l'invention à l'état monté,
[Fig. 4] représente schématiquement en perspective vue de dessous un dispositif de maintien d'au moins un tube de refroidissement suivant un mode de réalisation de l'invention à l'état monté,
[Fig. 5] représente schématiquement en perspective vue de dessous un dispositif de maintien d'au moins un tube de refroidissement suivant un mode de réalisation de l'invention à l'état monté,
[Fig. 6] représente schématiquement en perspective vue de dessus un premier support du dispositif de maintien d'au moins un tube de refroidissement suivant un mode de réalisation de l'invention,
[Fig. 7] représente schématiquement en perspective vue de dessus un deuxième support du dispositif de maintien d'au moins un tube de refroidissement suivant un mode de réalisation de l'invention,
[Fig. 8] représente schématiquement en perspective vue de dessous le dispositif de maintien d'au moins un tube de refroidissement suivant un mode de réalisation de l'invention à l'état démonté,
[Fig. 9] représente schématiquement en perspective vue de dessus le dispositif de maintien d'au moins un tube de refroidissement suivant un mode de réalisation de l'invention à l'état démonté,
[Fig. 10] représente schématiquement en vue dans un plan transversal une patte du premier support coopérant avec une patte du deuxième support du dispositif de maintien d'un tube de refroidissement suivant un mode de réalisation de l'invention,
[Fig. 11] représente schématiquement en perspective vue de dessous une patte du dispositif de maintien d'au moins un tube de refroidissement suivant un mode de réalisation de l'invention,
[Fig. 12] représente schématiquement en perspective vue de dessus au moins un tube de refroidissement lors d'une étape de montage sur le carter,
[Fig. 13] représente schématiquement en perspective vue de dessus le dispositif de maintien d'au moins un tube de refroidissement suivant un mode de réalisation de l'invention lors d'une étape de montage sur le carter, postérieure à celle de la figure 12,
[Fig. 14] représente schématiquement en perspective vue de dessus le dispositif de maintien d'au moins un tube de refroidissement suivant un mode de réalisation de l'invention lors d'une étape de montage sur un carter, postérieure à celle de la figure 13,
[Fig. 15] représente schématiquement en perspective vue de dessus le dispositif de maintien d'au moins un tube de refroidissement suivant un mode de réalisation de l'invention lors d'une étape de montage sur un carter, postérieure à celle de la figure 14,
[Fig. 16] représente schématiquement en perspective vue de dessus le dispositif de maintien d'au moins un tube de refroidissement suivant un mode de réalisation de l'invention lors d'une étape de montage sur un carter, postérieure à celle de la figure 15,
[Fig. 17] représente schématiquement en perspective vue de dessus le dispositif de maintien d'au moins un tube de refroidissement suivant un mode de réalisation de l'invention lors d'une étape de montage sur un carter, postérieure à celle de la figure 16,
[Fig. 18] représente schématiquement en perspective vue de dessus le dispositif de maintien d'au moins un tube de refroidissement suivant un mode de réalisation de l'invention lors d'une étape de montage sur un carter, postérieure à celle de la figure 17,
[Fig. 19] représente schématiquement en vue dans un plan transversal le dispositif de maintien d'un tube de refroidissement suivant un mode de réalisation de l'invention à l'état monté, sans représenter les tubes de refroidissement,
[Fig. 20] représente schématiquement un organigramme d'un exemple de procédé de montage d'un tube de refroidissement à l'aide du dispositif de maintien d'un tube de refroidissement suivant un mode de réalisation de l'invention.

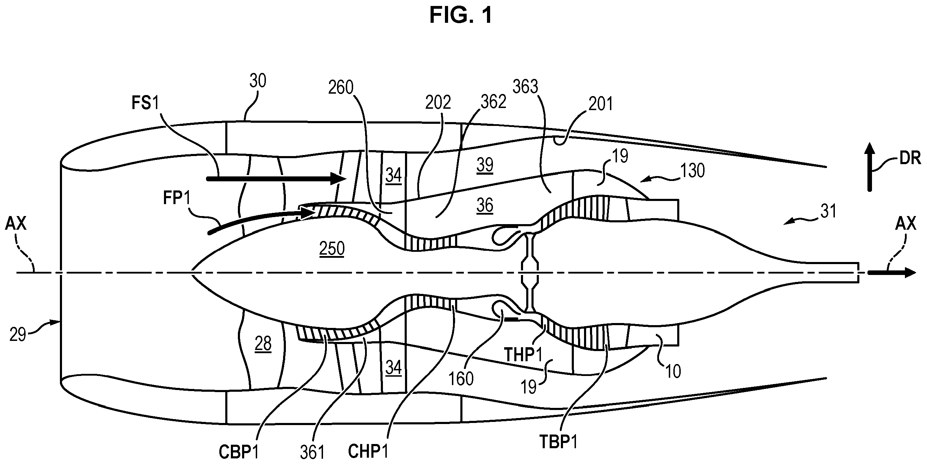

On décrit ci-dessous plus en détail en référence à la figure 1 un exemple de turbomachine 10 sur laquelle peut être utilisé le dispositif 100 de maintien d'au moins un tube T de refroidissement à l'extérieur d'une surface externe 190 d'un carter de cette turbomachine 10 suivant l'invention.

Ainsi que cela est connu, la turbomachine 10 représentée à la figure 1 est destinée à être installée sur un aéronef non représenté pour le propulser dans les airs.

L'ensemble moteur à turbine à gaz ou turbomachine 10 a un axe AX, orienté de l'amont vers l'aval ou de l'avant vers l'arrière ou de la gauche vers la droite dans ce qui suit. La direction allant de l'intérieur vers l'extérieur est la direction radiale DR partant de l'axe AX. Le terme axialement désigne une direction suivant l'axe AX. Un plan axial est un plan contenant l'axe AX. Une direction située dans un plan transversal à l'axe AX est appelée direction transversale.

La turbomachine 10 est par exemple à double corps. La turbomachine 10 comprend un ensemble de soufflante 28 et un moteur à turbine à gaz central 130. Le moteur à turbine à gaz central 130 comprend, de l'amont vers l'aval dans le sens d'écoulement des gaz, un compresseur basse pression CBP1, un compresseur haute pression CHP1, une chambre de combustion 160, une turbine haute pression THP1 et une turbine basse pression TBP1 qui délimitent un flux primaire de gaz FP1. L'ensemble de soufflante 28 comprend un ensemble de pales de soufflante s'étendant radialement vers l'extérieur depuis un rotor 250. La turbomachine 10 a une extrémité amont d'admission 29 et une extrémité aval d'échappement 31. La turbomachine 10 comprend également un carter inter-veine 36 qui délimite une veine primaire dans laquelle circule le flux primaire FP1 qui traverse le compresseur haute pression CHP1, la turbine haute pression THP1 et la turbine basse pression TBP1.

Le carter inter-veine 36 comporte, de l'amont vers l'aval, un carter 361 du compresseur basse pression CBP1, un carter intermédiaire 260, qui est interposé entre le compresseur basse pression CBP1 et le compresseur haute pression CHP1, un carter 362 du compresseur haute pression CHP1, un carter 363 de la turbine haute pression THP1 et un carter 19 de la turbine basse pression TBP1.

La turbine haute pression THP1 est solidaire du compresseur haute pression CHP1 de manière à former un corps haute pression, tandis que la turbine basse pression TBP1 est solidaire du compresseur basse pression CBP1 de manière à former un corps basse pression, de sorte que chaque turbine entraîne le compresseur associé en rotation autour de l'axe AX sous l'effet de la poussée des gaz provenant de la chambre de combustion 160.

En fonctionnement, l'air s'écoule à travers l'ensemble de soufflante 28 et une première partie FP1 (flux primaire FP1) du flux d'air est acheminée à travers le compresseur haute pression CHP1, dans lequel le flux d'air est comprimé et envoyé à la chambre de combustion 160. Les produits de combustion chauds (non représentés sur les figures) provenant de la chambre de combustion 160 sont utilisés pour entraîner les turbines THP1 et TBP1 et produire ainsi la poussée de la turbomachine 10. La turbomachine 10 comprend également une veine secondaire 39 qui est utilisée pour faire passer un flux secondaire FS1 du flux d'air évacué de l'ensemble de soufflante 28 autour du carter inter-veine 36. Plus précisément, la veine secondaire 39 s'étend entre une paroi interne 201 d'un carénage 30 de soufflante ou nacelle 30 et le carter inter-veine 36 entourant le moteur à turbine à gaz central 130. Des bras 34 relient le carter intermédiaire 260 à la paroi interne 201 du carénage 30 dans la veine secondaire 39 du flux secondaire FS1.

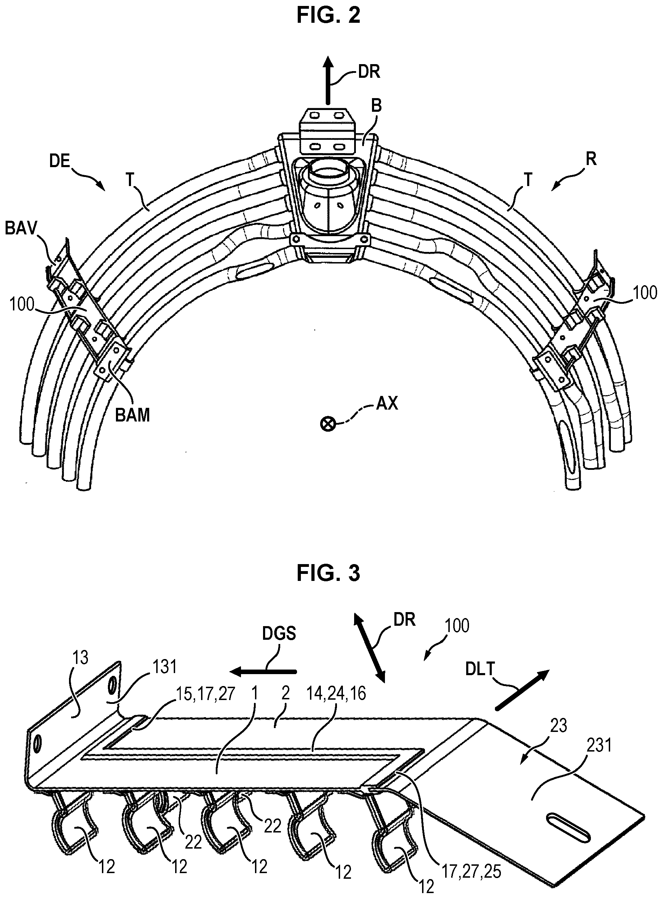

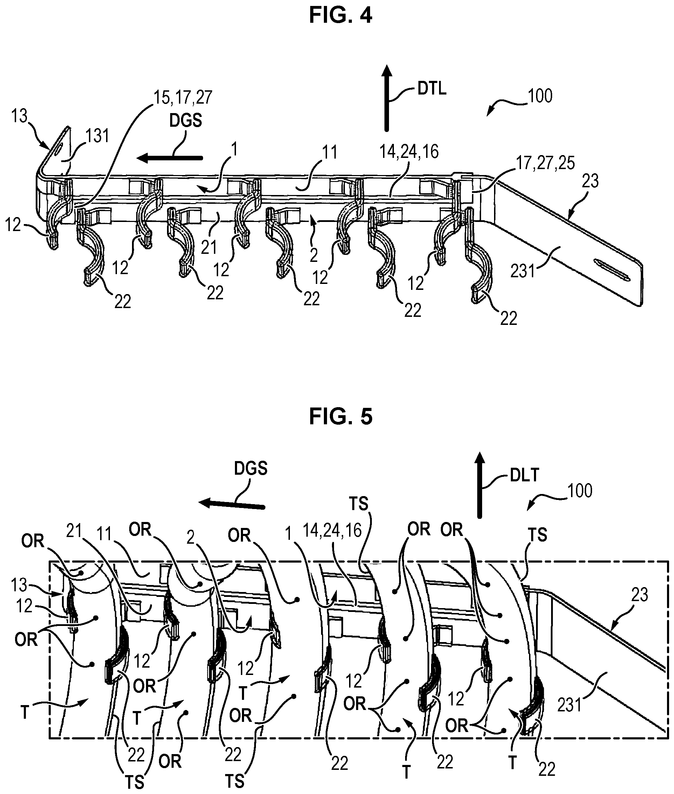

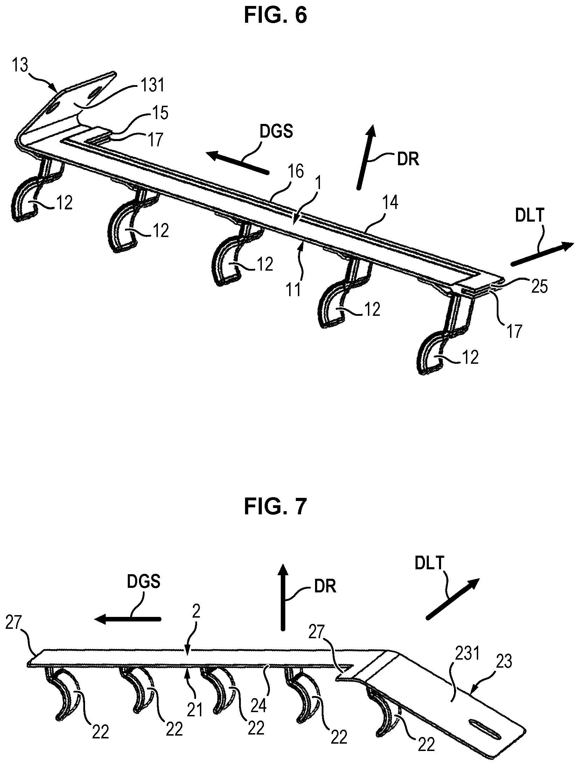

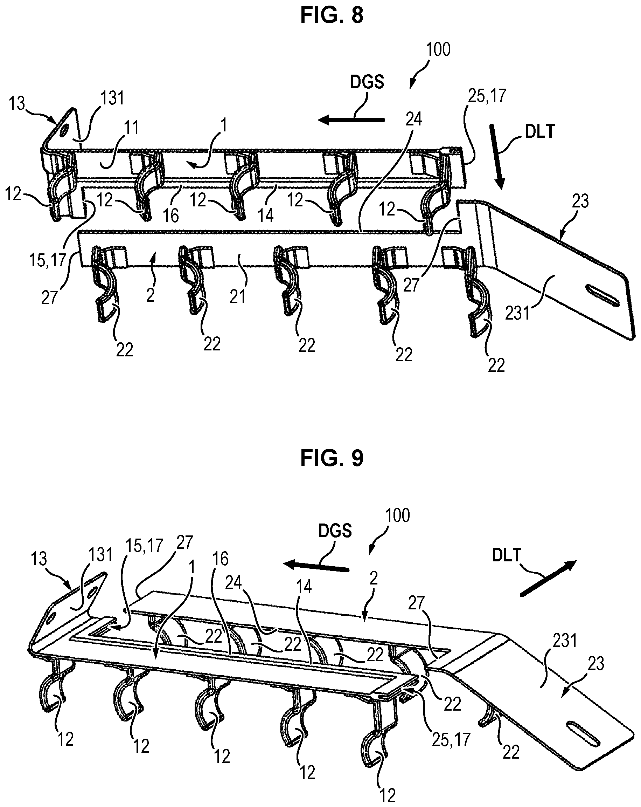

En référence aux figures 2 à 20, le dispositif 100 de maintien suivant l'invention permet de maintenir un ou plusieurs tubes T de refroidissement ou une ou plusieurs rampes R de refroidissement, à une certaine distance radialement au-dessus de la surface externe 190 du carter et comporte des moyens de fixation à ce carter, ce carter appartenant au carter inter-veine 36, ce carter étant notamment le carter 19 de la turbine basse pression TBP1 dans les modes de réalisation décrits ci-dessous et pouvant en variante être l'un parmi le carter 361 du compresseur basse pression CBP1, le carter intermédiaire 260, le carter 362 du compresseur haute pression CHP1, le carter 363 de la turbine haute pression THP1 et le carter 19 de la turbine basse pression TBP1.

Le carter est refroidi en utilisant la technologie du refroidissement par impact. Chaque tube T de refroidissement et/ou chaque rampe R de refroidissement est à jet d'air. A cet effet, chaque tube T de refroidissement est percé d'une série d'orifices OR, qui sont répartis sur sa longueur et qui débouchent au droit de la surface externe 190 du carter 19. Chaque rampe R de refroidissement peut être formée d'un ou de plusieurs tubes T de refroidissement reliés entre eux et s'étendant dans un même plan transversal. Chaque tube T de refroidissement a dans un plan axial une surface extérieure TS courbe, par exemple arrondie ou circulaire. Chaque tube T de refroidissement peut être métallique, par exemple en acier. Chaque tube T de refroidissement est cintré et s'étend transversalement sur une certaine plage angulaire autour du carter 19, par exemple sur environ 90°, à savoir autour de l'axe AX. Un dispositif DE d'envoi d'air est prévu pour envoyer de l'air sous pression dans le ou les tubes T de refroidissement et ainsi projeter les jets d'air sous pression par leurs orifices OR contre la surface externe 190 du carter 19. L'air sous pression transitant au travers de ces orifices OR assure une ventilation par impact du carter 19. Il est par exemple prévu plusieurs tubes T de refroidissement disposés côte à côte axialement. Il est par exemple prévu plusieurs plages angulaires, qui font le tour du carter 19 et dans chacune desquelles se trouvent un ou plusieurs tubes T de refroidissement disposés côte à côte axialement, par exemple quatre plages angulaires de chacune environ 90°. Dans l'exemple de réalisation représenté aux figures 1 à 20, le carter 19 de la turbine basse pression TBP1 est de forme générale ayant une surface externe 190 s'élargissant de l'amont vers l'aval, par exemple sensiblement tronconique, et les tubes T de refroidissement sont disposés dans des plans transversaux côte à côte axialement, en ayant par rapport à l'axe AX du carter 19 une distance radiale augmentant de l'amont vers l'aval pour suivre la surface externe 190.

Les jeux radiaux de la turbine basse pression TBP1 entre son rotor (les sommets d'aube, non représentés) et le carter 19 (les secteurs étanchéité, non représentés) entourant ce rotor sont gérés par refroidissement du carter 19 sur lequel sont fixés les secteurs étanchéité. Ce système de refroidissement du carter de la turbine basse pression TBP1 peut être du type LPTCC (en anglais : Low Pressure Turbine Clearance Control) ou encore du type LPTACC (en anglais : Low Pressure Turbine Active Clearance Control).

De l'air est prélevé dans le flux secondaire FS1 au niveau du compresseur basse pression CBP1, puis est acheminé jusqu'aux rampes R de refroidissement et/ou au(x) tube(s) T de refroidissement via les différents éléments décrits ci-dessous du dispositif DE d'envoi d'air.

Dans le cas d'un système de refroidissement de type LPTCC, le débit dans le système est directement proportionnel au débit dans le flux secondaire (le débit de prélèvement).

Dans un système de refroidissement de type LPTACC, le débit est contrôlé via une vanne motorisée reliée au calculateur en fonction des phases de vol (décollage, ascension, croisière, etc...).

Par exemple, dans le cas du système de refroidissement de type LPTACC, le dispositif DE d'envoi d'air comporte :
- une vanne, qui est positionnée à l'amont de la turbine basse pression TBP1 et qui calibre le débit nécessaire au contrôle des jeux de la turbine basse pression TBP1 via un calculateur en fonction des phases de vol,
- une canalisation, qui achemine l'air de refroidissement de la vanne jusqu'à la turbine basse pression TBP1, et plus particulièrement jusqu'aux boitiers B,
- un ou plusieurs boitiers B d'alimentation en air sous pression, raccordés chacun à une ou plusieurs rampes de refroidissement R situées de part et d'autre de chacun des boitiers B et fixées dessus. Les boîtiers B font office de collecteur et distribuent l'air obtenu dans les rampes R.
- une ou plusieurs rampes de refroidissement R, qui comportent chacune un ou plusieurs tubes T de refroidissement et percés sur leur partie en vis-à-vis du carter 19, qui projettent l'air de refroidissement sur la surface externe 190 du carter 19, afin de réduire sa température, par conséquent son diamètre et donc le diamètre global du stator en vis-à-vis du rotor.

Dans un exemple de réalisation, le carter 19 est équipé de deux boitiers B, positionnés à environ 180° l'un de l'autre (un seul étant visible sur la figure 2). Chaque boitier B est équipé de par exemple cinq rampes R. Chaque rampe R comporte par exemple deux tubes T de refroidissement fixés de part et d'autre du boîtier B.

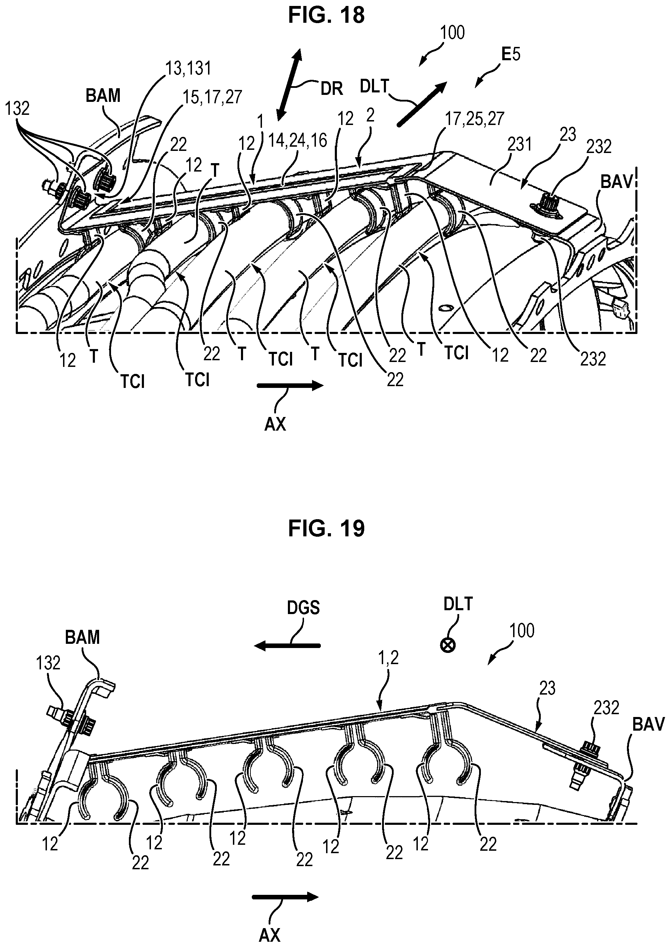

Sur les figures 18 et 19, on peut voir que les dispositifs 100 de maintien des rampes R de refroidissement ou tubes T de refroidissement sont fixés au carter 19 par une bride amont BAM et par une bride aval BAV. Bien que cela ne soit pas représenté, les boitiers B sont fixés sur le carter 19 de la même façon.

Il est par exemple prévu un seul dispositif 100 de maintien par tube T de refroidissement. Il peut être prévu un ou plusieurs dispositifs 100 de maintien autour du carter 19, par exemple quatre dispositifs 100 de maintien. Il peut être prévu un seul dispositif 100 de maintien par plage angulaire de plusieurs tubes T de refroidissement disposés côte à côte axialement.

On décrit ci-dessous plus en détail le dispositif 100 de maintien suivant l'invention en référence aux figures 3 à 11.

Le dispositif 100 de maintien comporte un premier support 1 supportant au moins une patte 12 d'appui contre la gauche d'au moins un tube T de refroidissement et un deuxième support 2 supportant au moins une patte 22 d'appui contre la droite de ce tube T de refroidissement. La ou les pattes 12 sont appelées patte(s) gauche(s) 12. La ou les pattes 22 sont appelées patte(s) droite(s) 22.

Le premier support 1 a une première face interne 11 tournée vers le tube T de refroidissement et vers la surface externe 190 du carter 19. Chaque patte gauche 12 est fixée à la première face interne 11, pouvant par exemple être plane, du support 1 et est située du côté de celle-ci. Le deuxième support 2 a une deuxième face interne 21 tournée vers le tube T de refroidissement et vers la surface externe 190 du carter 19. Chaque patte droite 22 est fixée à la deuxième face interne 21, pouvant par exemple être plane, du support 2 et est située du côté de celle-ci. Chaque face 11 et/ou 21 peut être formée d'une tôle métallique.

Chaque patte gauche 12 est configurée pour retenir partiellement le tube T de refroidissement, c'est-à-dire pour supporter partiellement radialement le tube T de refroidissement, à savoir vers la première face interne 11 et/ou dans les deux sens de l'intérieur vers l'extérieur, et ce en agissant à partir de la gauche du tube T de refroidissement. Chaque patte droite 22 est configurée pour retenir partiellement radialement le tube T de refroidissement, c'est-à-dire pour supporter partiellement le tube T de refroidissement, à savoir vers la deuxième face interne 21 et/ou dans les deux sens de l'intérieur vers l'extérieur, et ce en agissant à partir de la droite du tube T de refroidissement. La patte gauche 12 coopère avec la patte droite 22 pour retenir le tube T de refroidissement à droite et à gauche, ainsi que radialement, à savoir dans les deux sens de l'intérieur vers l'extérieur.

La patte gauche 12 et la patte droite 22 laissent ainsi libre le côté TCI du tube T tourné vers le carter 19, c'est-à-dire tourné radialement vers l'intérieur. La patte gauche 12 et la patte droite 22 sont ainsi à distance des orifices OR de jet d'air du tube T de refroidissement répartis sur ce côté TCI du tube T tourné vers le carter 19. Le tube T de refroidissement peut ainsi être rapproché du carter 19 pour avoir un entrefer E plus petit, délimité directement entre le tube T de refroidissement et le carter 19, sans que des parties du dispositif 100 de maintien empiètent sur cet entrefer E et en évitant donc que des colliers de fixation suivant l'état de la technique entrent dans cet entrefer. Les pattes 12 et 22 sont ainsi à distance de l'entrefer E délimité par le tube T de refroidissement et la surface externe 190 du carter 19, tout en permettant d'immobiliser le tube T de refroidissement dans les deux sens de la direction radiale DR. L'obtention d'un entrefer E plus petit permet d'améliorer les performances de refroidissement et donc les performances de la turbine TBP1.

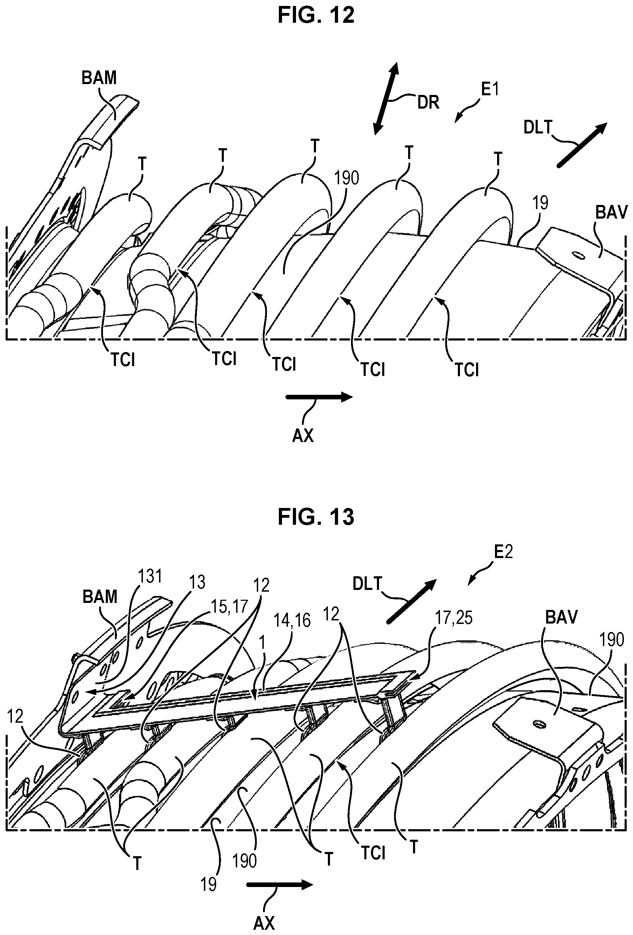

Le dispositif 100 de maintien comporte des premiers moyens 13 de fixation du premier support 1 à une première bride du carter 19, et des deuxièmes moyens 23 de fixation du deuxième support 2 à une deuxième bride du carter 19, les deuxièmes moyens 23 de fixation étant distincts des premiers moyens 13 de fixation. La première bride peut être par exemple la bride amont BAM et la deuxième bride peut être par exemple la bride aval BAV, ainsi que représenté aux figures 12 à 19. En variante, la première bride peut être par exemple la bride aval BAV et la deuxième bride peut être par exemple la bride amont BAM. Les premiers moyens 13 de fixation peuvent comprendre une première aile 131 d'extrémité et un ou plusieurs boulonnages 132 pour fixer la première aile 131 d'extrémité à la première bride. Les deuxièmes moyens 23 de fixation peuvent comprendre une deuxième aile 231 d'extrémité et un ou plusieurs boulonnages 232 pour fixer la deuxième aile 231 d'extrémité à la deuxième bride.

Suivant un mode de réalisation de l'invention, la patte gauche 12 est décalée par rapport à la patte droite 22 suivant une direction longitudinale DLT du tube T de refroidissement. Par exemple, ainsi que représenté aux figures 3, 4, 5, 12 à 18, la patte gauche 12 est entièrement décalée longitudinalement par rapport à la patte droite 22, c'est-à-dire qu'aucune partie de la patte gauche 12 n'est en face de la patte droite 22 pour le même tube T de refroidissement. Le terme longitudinalement désigne une direction suivant la direction DLT longitudinale dans laquelle le tube T de refroidissement s'étend autour du carter 19, cette direction DLT longitudinale étant située dans un plan transversal. Pour le tube T de refroidissement cintré autour du carter 19, cette direction DLT longitudinale est une direction circonférentielle ou tangentielle par rapport à la direction radiale DR. L'invention permet ainsi de répartir les forces de contact du dispositif 100 de maintien le long du tube T.

Suivant un mode de réalisation de l'invention, le premier support 1 comporte plusieurs pattes gauches 12 de retenue partielle vers la gauche de respectivement plusieurs tubes T de refroidissement répartis entre la droite et la gauche. Les pattes gauches 12 de retenue partielle sont réparties de la droite vers la gauche radialement sous le support 1. Le deuxième support 2 comporte plusieurs pattes droite 22 de retenue partielle vers la droite de respectivement ces tubes T de refroidissement répartis entre la droite et la gauche. Les pattes droite 22 de retenue partielle sont également réparties de la droite vers la gauche radialement sous le support 2. Par exemple, ainsi que représenté aux figures 3 à 9 et 12 à 19, les pattes gauches 12 de retenue partielle sont réparties l'une derrière l'autre suivant une direction transversale DGS allant de la droite vers la gauche et/ou les pattes droites 22 de retenue partielle sont réparties l'une derrière l'autre suivant la direction transversale DGS. Par exemple, il est prévu cinq pattes gauches 12 situées radialement sous la face interne 11 et cinq pattes droites 22 situées radialement sous la face interne 21, pour retenir respectivement cinq tubes T répartis de droite à gauche.

Suivant un mode de réalisation de l'invention, la patte gauche 12 et/ou la patte droite 22 a une forme courbe de crochet.

Suivant un mode de réalisation de l'invention, la patte gauche 12 a une partie 121 d'extrémité libre gauche de soutien du tube T de refroidissement en oblique vers la droite et vers la première face interne 11, et/ou la patte droite 22 a une partie 221 d'extrémité libre droite de soutien du tube T de refroidissement en oblique vers la gauche et vers la deuxième face interne 21.

Suivant un mode de réalisation de l'invention, la partie 121 d'extrémité gauche de la patte gauche 12 et la partie 122 d'extrémité droite de la patte droite 22 comprennent chacune une extrémité libre radialement interne (extrémité libre de la partie 221 et extrémité libre de la partie 122), et le tube T comprend une extrémité libre radialement interne, l'extrémité libre radialement interne du tube T étant située radialement sous l'extrémité libre radialement interne de chacune des pattes 12, 22.

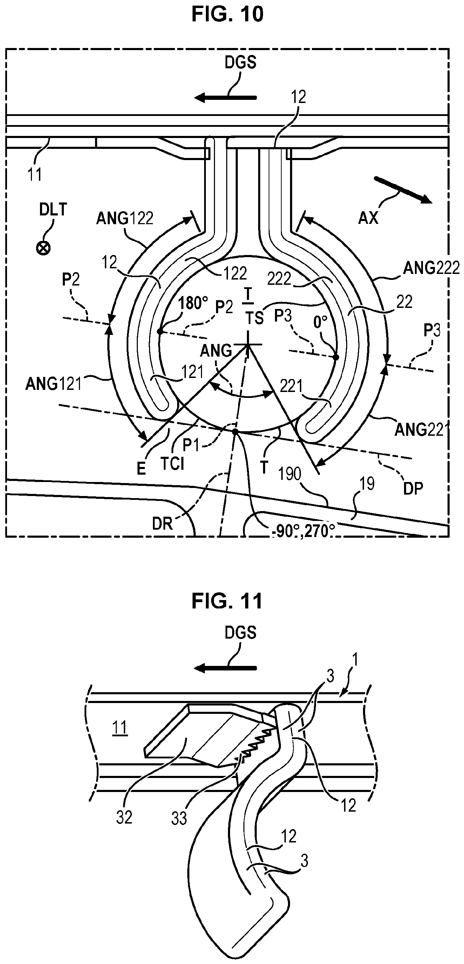

Suivant un mode de réalisation de l'invention, la patte gauche 12 comporte une première partie médiane 122, qui est raccordée à la première face interne 11 et qui occupe un premier secteur angulaire ANG122 disposé en regard du premier support 1. Ce premier secteur angulaire ANG122 va jusqu'à 180° (point P2) autour du tube T de refroidissement, ainsi que cela est illustré à la figure 10, où les valeurs angulaires sont référencées dans un plan axial par rapport à un point P1 situé sur le côté TCI du tube T de refroidissement, tourné vers la surface externe 190 du carter 19 et qui est pris dans ce cas à 270° ou -90°. La partie 121 d'extrémité libre gauche est raccordée à la première partie médiane 122. La partie 121 d'extrémité libre gauche fait un deuxième secteur angulaire ANG121 autour du tube T de refroidissement. Ce deuxième secteur angulaire ANG121 prolonge vers l'intérieur le premier secteur angulaire ANG122 et est destiné à être disposé en regard de la surface externe 190 du carter 19. Ce deuxième secteur angulaire ANG121 s'étend de 180° à une valeur maximale d'extrémité inférieure (extrémité libre) à 270°, pouvant être inférieure ou égale à 250°, et notamment inférieure ou égale à 235°.

De même, la patte droite 22 comporte une deuxième partie médiane 222, qui est raccordée à la deuxième face interne 21 et qui occupe un troisième secteur angulaire ANG222 disposé en regard du deuxième support 2. Ce troisième secteur angulaire ANG222 va jusqu'à 0° (point P3) autour du tube T de refroidissement. La partie 221 d'extrémité libre droite est raccordée à la deuxième partie médiane 222. La partie 221 d'extrémité libre droite fait un quatrième secteur angulaire ANG221 autour du tube T de refroidissement. Ce quatrième secteur angulaire ANG221 prolonge vers l'intérieur le troisième secteur angulaire ANG222 et est destiné à être disposé en regard de la surface externe (190) du carter (19). Ce quatrième secteur angulaire ANG221 s'étend de 0° à une valeur maximale d'extrémité (extrémité libre) supérieure à -90°, pouvant être supérieure ou égale à -70°, et notamment supérieure ou égale à -55°.

Suivant un mode de réalisation de l'invention, la patte gauche 12 et la patte droite 22 s'étendent jusqu'à une droite DP, qui est parallèle à la surface externe 190 du carter 19 et qui est tangente au tube T de refroidissement, ainsi que représenté par exemple à la figure 10.

Suivant un mode de réalisation de l'invention, la patte gauche 12 et la patte droite 22 délimitent par exemple un angle ANG d'ouverture vers l'intérieur, qui est supérieur à 40°, et par exemple supérieure ou égale à 70°, ainsi que représenté par exemple à la figure 10.

Suivant un mode de réalisation de l'invention, la patte gauche 12 (partie 121 et/ou 122) a une forme arrondie de contact avec la gauche du tube T de refroidissement et est par exemple en forme de portion de cylindre correspondant à la surface externe TS du tube T de refroidissement. La patte droite 22 a une forme arrondie (partie 221 et/ou 222) de contact avec la droite du tube T de refroidissement et est par exemple en forme de portion de cylindre correspondant à la surface externe TS du tube T de refroidissement.

Suivant un mode de réalisation de l'invention, le premier support 1 est distinct du deuxième support 2. Le premier support 1 est placé contre le deuxième support 2 au moins suivant la direction longitudinale DLT du tube T de refroidissement et par exemple également suivant la direction transversale DGS allant entre la droite et la gauche.

Suivant un mode de réalisation de l'invention, ainsi qu'illustré aux figures 3 à 9 et 13 à 16, le premier support 1 comporte au moins une première partie 14 et/ou 17 de glissière. Le deuxième support 2 comporte au moins une deuxième partie 24 de glissière, apte à glisser contre la première partie 14 de glissière le long de la direction transversale DGS allant entre la droite et la gauche jusqu'à une position de montage et/ou au moins une deuxième partie 27 de glissière, apte à glisser contre la première partie 17 de glissière le long de la direction longitudinale DLT du tube T de refroidissement jusqu'à la position de montage. Dans la position de montage, la patte gauche 21 et la patte droite 22 se trouvent contre respectivement la gauche et la droite du tube T de refroidissement, ainsi que décrit ci-dessus. Les premiers et deuxièmes moyens 13, 23 de fixation permettent d'immobiliser les premier et deuxième supports 1, 2 dans la position de montage. Les parties de glissière permettent ainsi de guider le montage des supports 1 et 2 l'un contre l'autre. La première partie 14 et/ou 17 de glissière peut être une partie femelle de glissière, dans laquelle la deuxième partie 24 et/ou 27 de glissière est apte à glisser, ou inversement la deuxième partie 24 et/ou 27 de glissière peut être une partie femelle de glissière, dans laquelle la première partie 14 et/ou 17 de glissière est apte à glisser.

Suivant un mode de réalisation de l'invention, ainsi qu'illustré aux figures 3 à 9 et 13 à 16, le premier support 1 comporte au moins une butée 15 et/ou 25 d'arrêt de glissement, configurée pour arrêter le glissement du deuxième support 2 suivant la direction transversale DGS jusqu'à la position de montage. La butée 15 peut être formée par la première partie 17 de glissière. En variante, le deuxième support 2 comporte au moins une butée d'arrêt de glissement, configurée pour arrêter le glissement du premier support 1 suivant la direction transversale DGS jusqu'à la position de montage. Cette butée peut être formée par la deuxième partie 27 de glissière 27.

Suivant un mode de réalisation de l'invention, ainsi qu'illustré aux figures 3 à 9 et 13 à 16, le premier support 1 comporte au moins une autre butée 16 d'arrêt de glissement, configurée pour arrêter le glissement du deuxième support 2 suivant la direction longitudinale DLT du tube T de refroidissement jusqu'à la position de montage. L'autre butée 16 peut être formée par la première partie 14 de glissière.

En variante, le deuxième support 2 comporte au moins une autre butée d'arrêt de glissement, configurée pour arrêter le glissement du premier support 1 suivant la direction longitudinale DLT du tube T de refroidissement jusqu'à la position de montage. Cette autre butée peut être formée par la deuxième partie 24 de glissière.

Suivant un mode de réalisation de l'invention, le support 1 et/ou le support 2 peut être par exemple une tôle sur laquelle sont extrudés via fabrication additive métallique la ou les patte(s) gauche(s) 12 et/ou la ou les patte(s) droite(s) 22. Bien entendu, la ou les patte(s) gauche(s) 12 et/ou la ou les patte(s) droite(s) 22 peuvent être également fabriquées de manière conventionnelle (ensemble mécanosoudé ou autre)

Suivant un mode de réalisation de l'invention, ainsi qu'illustré à la figure 11, chaque patte gauche 12 et/ou chaque patte droite 22 est recouverte d'une enveloppe 3 d'amortissement en un matériau souple (par exemple en laine de silice ou autres). Cela permet de ne pas endommager les tubes T lors du montage ou dans les cas de fonctionnement anormaux. Chaque enveloppe 3 peut être retenue sur la patte gauche 12 et/ou sur la patte droite 22 par une plaquette dentée 32, qui est fixée (par exemple par soudage) à la première face interne 11 ou à la deuxième face interne 21 et dont les dents 33 appuient contre l'enveloppe 3.

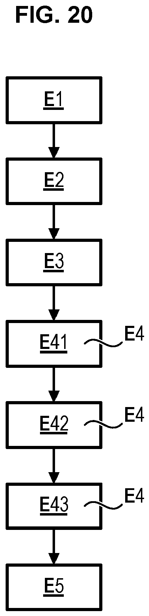

On décrit ci-dessous un exemple du procédé de montage du ou des tubes T de refroidissement sur le carter 19 de la turbomachine 10 à l'aide du dispositif 100 de maintien décrit ci-dessus, en référence à la figure 20.

Au cours d'une première étape E1 représentée à la figure 12, on positionne le ou les tubes T de refroidissement autour de la surface externe 190 du carter 19 de turbomachine. Ce positionnement est par exemple effectué en installant le ou les boîtiers B sur le carter 19 et/ou en installant le dispositif DE d'envoi d'air sur la turbomachine 10.

Puis, au cours d'une deuxième étape E2 postérieure à la première étape E1 et représentée à la figure 13, on positionne le premier support 1 pour disposer la ou les pattes gauches 12 contre la gauche du ou des tubes T de refroidissement.

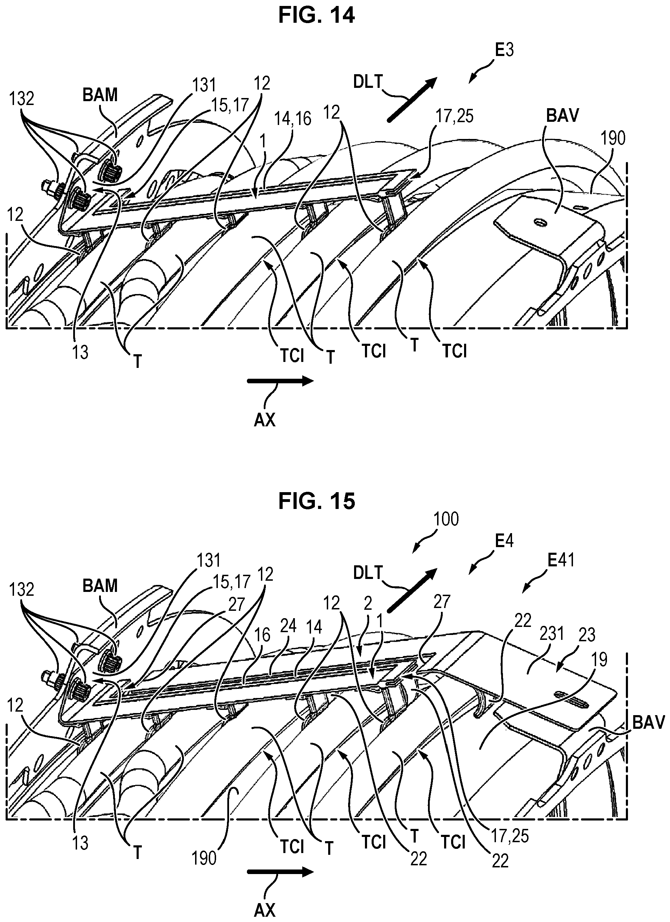

Au cours d'une troisième étape E3 postérieure à la deuxième étape E2 et représentée à la figure 14, on fixe le premier support 1 à la première bride (par exemple BAM) du carter 19 par les premiers moyens 13 de fixation, par exemple à l'aide du ou des boulonnages 132, ainsi que décrit ci-dessus.

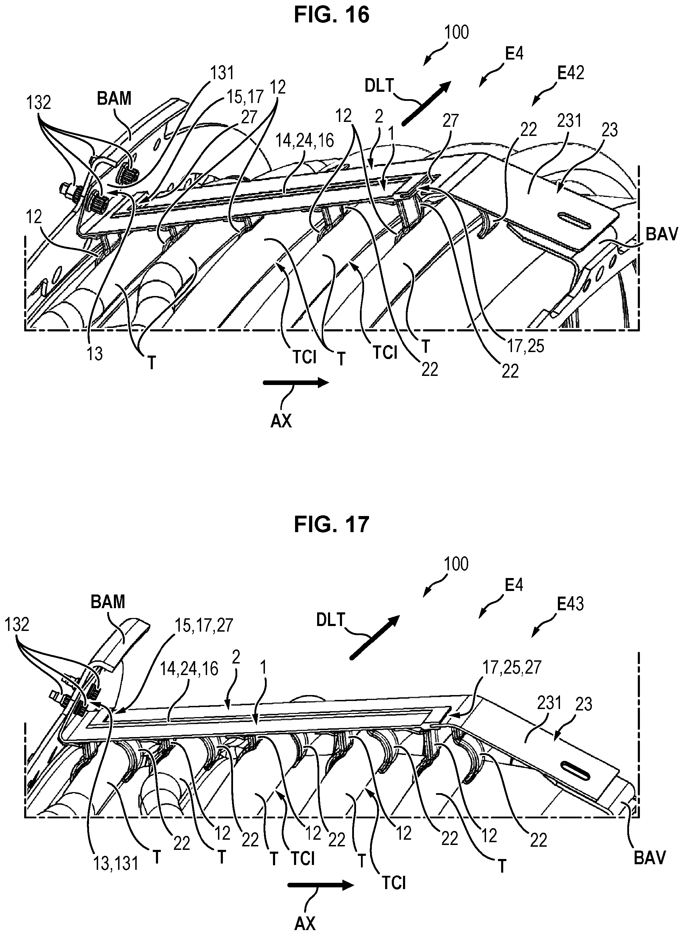

Au cours d'une quatrième étape E4 postérieure à la troisième étape E3 et représentée aux figures 15 à 17, on positionne le deuxième support 2 du dispositif 100 de maintien contre le premier support 1 pour disposer la patte droite 22 contre la droite du tube T de refroidissement. Cette quatrième étape E4 comporte par exemple d'abord une première sous-étape E41 (représentée à la figure 15) d'amenée du deuxième support 2 à distance du support 1 pour passer la ou les pattes 22 droite(s) à distance des tubes T et entre les tubes T, puis une deuxième sous-étape E42 (représentée à la figure 16) d'accostage de la deuxième partie 24 de glissière 24 contre la première partie 14 de glissière 14 dans la direction DLT longitudinale du tube T de refroidissement pour que le deuxième support 2 vienne contre l'autre butée 16, puis une troisième sous-étape E41 (représentée à la figure 17), dans laquelle on fait glisser la deuxième partie 24 de glissière 24 du deuxième support 2 suivant la direction transversale DGS de la droite vers la gauche contre la première partie 14 de glissière 14 du premier support 1 jusqu'à ce que le deuxième support 2 bute contre la butée 15 et/ou 25.

Au cours d'une cinquième étape E5 postérieure à la quatrième étape E4 et représentée à la figure 18, on fixe le deuxième support 2 à la deuxième bride (par exemple BAV) du carter 19 par les deuxièmes moyens 23 de fixation, par exemple à l'aide du ou des boulonnages 232, ainsi que décrit ci-dessus.

Ce procédé permet un montage en douceur sans risquer d'endommager les tubes et ne nécessite pas de souplesse dans les pattes 12, 22 elles-mêmes, cette souplesse risquant de causer leur casse prématurée et de perdre la tenue mécanique du tube T.
En outre l'invention permet de supprimer de la visserie et donc un gain en masse. En outre, le diamètre des rampes étant conditionné par le passage des outils permettant l'assemblage du dispositif de maintien et de la visserie sur le support de rampe, ces diamètres peuvent être augmentés.

Bien entendu, les modes de réalisation, caractéristiques, possibilités et exemples ci-dessus peuvent être combinés l'un avec l'autre ou être sélectionnés indépendamment l'un de l'autre.

## Revendications

1. Dispositif (100) de maintien d'au moins un tube (T) de refroidissement par jet d'air, le tube (T) de refroidissement par jet d'air étant destiné à refroidir une surface externe (190) d'un carter (19) de turbomachine, **caractérisé en ce que** le dispositif (100) de maintien comporte un premier support (1), comportant une première face interne (11) tournée vers le tube (T) de refroidissement et au moins une patte gauche (12) de retenue partielle vers la gauche du tube (T) de refroidissement, située du côté de la première face interne (11) et fixée à celle-ci, un deuxième support (2), comportant une deuxième face interne (21) tournée vers le tube (T) de refroidissement et au moins une patte droite (22) de retenue partielle vers la droite du tube (T) de refroidissement, située du côté de la deuxième face interne (21) et fixée à celle-ci, des premiers moyens (13) de fixation du premier support (1) à une première bride (BAM) du carter (19), des deuxièmes moyens (23) de fixation du deuxième support (2) à une deuxième bride (BAV) du carter (19), les deuxièmes moyens (23) de fixation étant distincts des premiers moyens (13) de fixation.

2. Dispositif suivant la revendication 1, **caractérisé en ce que** la patte gauche (12) est décalée par rapport à la patte droite (22) suivant une direction longitudinale (DLT) du tube (T) de refroidissement.

3. Dispositif suivant l'une quelconque des revendications précédentes, **caractérisé en ce que** la patte gauche (12) a une partie (121) d'extrémité libre gauche de soutien du tube (T) de refroidissement qui s'étend en oblique vers la droite,
et/ou la patte droite (22) a une partie (221) d'extrémité libre droite de soutien du tube (T) de refroidissement qui s'étend en oblique vers la gauche.

4. Dispositif suivant la revendication 3, **caractérisé en ce que** la patte gauche (12) comporte une première partie médiane (122), qui est raccordée à la première face interne (11) et qui occupe un premier secteur angulaire (ANG122), le premier secteur angulaire (ANG122) étant disposé en regard du premier support (1), la partie (121) d'extrémité libre gauche étant raccordée à la première partie médiane (122) et faisant un deuxième secteur angulaire (ANG121) autour du tube (T) de refroidissement, le deuxième secteur angulaire (ANG121) étant destiné à être disposé en regard de la surface externe (190) du carter (19), la patte droite (22) comporte une deuxième partie médiane (222), qui est raccordée à la deuxième face interne (21) et qui occupe un troisième secteur angulaire (ANG222), le troisième secteur angulaire (ANG222) étant disposé en regard du deuxième support (2), la partie (221) d'extrémité libre droite étant raccordée à la deuxième partie médiane (222) et faisant un quatrième secteur angulaire (ANG221) autour du tube (T) de refroidissement, le quatrième secteur angulaire (ANG221) étant destiné à être disposé en regard de la surface externe (190) du carter (19).

5. Dispositif suivant la revendication 4, **caractérisé en ce que** la partie (121) d'extrémité gauche de la patte gauche (12) et la partie (122) d'extrémité droite de la patte droite (22) comprennent chacune une extrémité libre radialement interne, et le tube (T) comprenant une extrémité libre radialement interne, l'extrémité libre radialement interne du tube (T) étant située radialement sous l'extrémité libre radialement interne de chacune des pattes (12, 22).

6. Dispositif suivant l'une quelconque des revendications précédentes, **caractérisé en ce que** le premier support (1) est placé contre le deuxième support (2) suivant une direction longitudinale (DLT) du tube (T) de refroidissement.

7. Dispositif suivant l'une quelconque des revendications précédentes, **caractérisé en ce que** le premier support (1) comporte au moins une première partie (14) de glissière, le deuxième support (2) comporte au moins une deuxième partie (24) de glissière, apte à glisser contre la première partie (14) de glissière le long d'une direction transversale (DGS) allant entre la droite et la gauche et/ou le long d'une direction longitudinale (DLT) du tube (T) de refroidissement jusqu'à une position de montage, dans laquelle la patte gauche (21) et la patte droite (22) se trouvent contre respectivement la gauche et la droite du tube (T) de refroidissement, les premiers et deuxièmes moyens (13, 23) de fixation permettant d'immobiliser les premier et deuxième supports (1, 2) dans la position de montage.

8. Dispositif suivant la revendication 7, **caractérisé en ce que** le premier support (1) ou le deuxième support (2) comporte au moins une butée (15, 25) d'arrêt de glissement, configurée pour arrêter le glissement du deuxième support (2) ou du premier support (1) suivant la direction transversale (DGS) dans la position de montage, et/ou le premier support (1) ou le deuxième support (2) comporte au moins une autre butée (16) d'arrêt de glissement, configurée pour arrêter le glissement du deuxième support (2) ou du premier support (1) suivant la direction longitudinale (DLT) du tube (T) de refroidissement dans la position de montage.

9. Dispositif suivant l'une quelconque des revendications précédentes, **caractérisé en ce que** le premier support (1) comporte une pluralité de pattes gauche (12) de retenue partielle vers la gauche de respectivement une pluralité de tubes (T) de refroidissement, le deuxième support (2) comporte une pluralité de pattes droite (22) de retenue partielle vers la droite de respectivement la pluralité de tubes (T) de refroidissement,
la pluralité de tubes (T) de refroidissement étant réparties entre la droite et la gauche,
les pattes gauches (12) étant réparties entre la droite et la gauche, les pattes droites (22) étant réparties entre la droite et la gauche.

10. Dispositif suivant la revendication 9, **caractérisé en ce que** les pattes gauches (12) de retenue partielle sont réparties l'une derrière l'autre suivant une direction transversale (DGS) allant entre la droite et la gauche et/ou les pattes droites (22) de retenue partielle sont réparties l'une derrière l'autre suivant la direction transversale (DGS).

11. Dispositif suivant l'une quelconque des revendications précédentes, **caractérisé en ce que** la première face interne (11) est plane et/ou la deuxième face interne (21) est plane.

12. Procédé de montage d'au moins un tube (T) de refroidissement sur un carter (19) de turbomachine à l'aide du dispositif (100) de maintien suivant l'une quelconque des revendications précédentes, **caractérisé en ce que** au cours d'une première étape (E1), on positionne le au moins un tube (T) de refroidissement autour d'une surface externe (190) du carter (19) de turbomachine, au cours d'une deuxième étape (E2) postérieure à la première étape (E1), on positionne le premier support (1) du dispositif (100) de maintien pour disposer la patte gauche (12) contre la gauche du tube (T) de refroidissement, au cours d'une troisième étape (E3) postérieure à la deuxième étape (E2), on fixe le premier support (1) à une première bride (BAM) du carter (19), au cours d'une quatrième étape (E4) postérieure à la troisième étape (E3), on positionne le deuxième support (2) du dispositif (100) de maintien contre le premier support (1) pour disposer la patte droite (22) contre la droite du tube (T) de refroidissement,
au cours d'une cinquième étape (E5) postérieure à la quatrième étape (E4), on fixe le deuxième support (2) à une deuxième bride (BAV) du carter (19).

## Patentansprüche

1. Halterungsvorrichtung (100) für mindestens ein Luftstrahl-Kühlrohr (T), wobei das Luftstrahl-Kühlrohr (T) dazu bestimmt ist, eine äußere Oberfläche (190) eines Turbomaschinengehäuses (19) zu kühlen, **dadurch gekennzeichnet, dass** die Halterungsvorrichtung (100) eine erste Stütze (1), die eine erste Innenfläche (11), die dem Kühlrohr (T) zugewandt ist, und mindestens eine linke Klaue (12) zum partiellen Zurückhalten hin zur Linken des Kühlrohrs (T) umfasst, die sich auf der Seite der ersten Innenfläche (11) befindet und daran befestigt ist, eine zweite Stütze (2), die eine zweite Innenfläche (21), die dem Kühlrohr (T) zugewandt ist, und mindestens eine rechte Klaue (22) zum partiellen Zurückhalten hin zur Rechten des Kühlrohrs (T) umfasst, die sich auf der Seite der zweiten Innenfläche (21) befindet und daran befestigt ist, erste Mittel (13) zur Befestigung der ersten Stütze (1) an einem ersten Bügel (BAM) des Gehäuses (19) und zweite Mittel (23) zur Befestigung der zweiten Stütze (2) an einem zweiten Bügel (BAV) des Gehäuses (19) umfasst, wobei die zweiten Befestigungsmittel (23) sich von den ersten Befestigungsmitteln (13) unterscheiden.

2. Vorrichtung nach Anspruch 1, **dadurch gekennzeichnet, dass** die linke Klaue (12) in Bezug auf die rechte Klaue (22) entlang einer Längsrichtung (DLT) des Kühlrohrs (T) versetzt ist.

3. Vorrichtung nach einem beliebigen der vorhergehenden Ansprüche, **dadurch gekennzeichnet, dass** die linke Klaue (12) einen linken freien Endteil (121) zur Unterstützung des Kühlrohrs (T) aufweist, der sich schräg nach rechts erstreckt,
und/oder die rechte Klaue (22) einen rechten freien Endteil (221) zum Unterstützen des Kühlrohrs (T) umfasst, der sich schräg nach links erstreckt.

4. Vorrichtung nach Anspruch 3, **dadurch gekennzeichnet, dass** die linke Klaue (12) einen ersten Mittelteil (122) umfasst, der an die erste Innenfläche (11) angeschlossen ist und der einen ersten Winkelsektor (ANG122) einnimmt, wobei der erste Winkelsektor (ANG122) der ersten Stütze (1) gegenüberliegend angeordnet ist, wobei der linke freie Endteil (121) an den ersten Mittelteil (122) angeschlossen ist und einen zweiten Winkelsektor (ANG121) um das Kühlrohr (T) bildet, wobei der zweite Winkelsektor (ANG121) dazu bestimmt ist, der äußeren Oberfläche (190) des Gehäuses (19) gegenüberliegend angeordnet zu sein, wobei die rechte Klaue (22) einen zweiten Mittelteil (222) umfasst, der an die zweite Innenfläche (21) angeschlossen ist und der einen dritten Winkelsektor (ANG222) einnimmt, wobei der dritte Winkelsektor (ANG222) der zweiten Stütze (2) gegenüberliegend angeordnet ist, wobei der rechte freie Endteil (221) an den zweiten Mittelteil (222) angeschlossen ist und einen vierten Winkelsektor (ANG221) um das Kühlrohr (T) bildet, wobei der vierte Winkelsektor (ANG221) dazu bestimmt ist, der äußeren Oberfläche (190) des Gehäuses (19) gegenüberliegend angeordnet zu sein.

5. Vorrichtung nach Anspruch 4, **dadurch gekennzeichnet, dass** der linke Endteil (121) der linken Klaue (12) und der rechte Endteil (122) der rechten Klaue (22) jeweils einen radial inneren freien Endteil umfassen und das Rohr (T) einen radial inneren freien Endteil umfasst, wobei der radial innere freie Endteil des Rohres (T) sich radial unter dem radial inneren freien Ende von jeder der Klauen (12, 22) befindet.

6. Vorrichtung nach einem beliebigen der vorhergehenden Ansprüche, **dadurch gekennzeichnet, dass** die erste Stütze (1) entlang einer Längsrichtung (DLT) des Kühlrohrs (T) gegen die zweite Stütze (2) platziert ist.

7. Vorrichtung nach einem beliebigen der vorhergehenden Ansprüche, **dadurch gekennzeichnet, dass** die erste Stütze (1) mindestens einen ersten Gleitführungsteil (14) umfasst, wobei die zweite Stütze (2) mindestens einen zweiten Gleitführungsteil (24) umfasst, der geeignet ist, gegen den ersten Gleitführungsteil (14) bis zu einer Montageposition entlang einer Querrichtung (DGS), die zwischen der Rechten und der Linken verläuft, und/oder entlang einer Längsrichtung (DLT) des Kühlrohres (T) zu gleiten, wobei in der Montageposition die linke Klaue (21) und die rechte Klaue (22) sich gegen die Linke beziehungsweise die Rechte des Kühlrohrs (T) befinden,
wobei das erste und das zweite Befestigungsmittel (13, 23) das Festsetzen der ersten und der zweiten Stütze (1, 2) in der Montageposition ermöglichen.

8. Vorrichtung nach Anspruch 7, **dadurch gekennzeichnet, dass** die erste Stütze (1) oder die zweite Stütze (2) mindestens einen Gleitanschlag (15, 25) umfasst, der dazu ausgestaltet ist, das Gleiten der zweiten Stütze (2) oder der ersten Stütze (1) entlang der Querrichtung (DGS) in der Montageposition anzuhalten, und/oder die erste Stütze (1) oder die zweite Stütze (2) mindestens einen anderen Gleitanschlag (16) umfasst, der dazu ausgestaltet ist, das Gleiten der zweiten Stütze (2) oder der ersten Stütze (1) entlang der Längsrichtung (DLT) des Kühlrohrs (T) in der Montageposition anzuhalten.

9. Vorrichtung nach einem beliebigen der vorhergehenden Ansprüche, **dadurch gekennzeichnet, dass** die erste Stütze (1) eine Vielzahl von linken Klauen (12) zum partiellen Zurückhalten hin zur Linken von jeweils einer Vielzahl von Kühlrohren (T) umfasst, wobei die zweite Stütze (2) eine Vielzahl von rechten Klauen (22) zum partiellen Zurückhalten hin zur Rechten von jeweils der Vielzahl von Kühlrohren (T) umfasst, wobei die Vielzahl von Kühlrohren (T) zwischen der Rechten und der Linken verteilt sind, wobei die linken Klauen (12) zwischen der Rechten und der Linken verteilt sind, wobei die rechten Klauen (22) zwischen der Rechten und der Linken verteilt sind.

10. Vorrichtung nach Anspruch 9, **dadurch gekennzeichnet, dass** die linken Klauen (12) zum partiellen Zurückhalten eine hinter der anderen entlang einer Querrichtung (DGS) verteilt sind, die von rechts nach links verläuft, und/oder die rechten Klauen (22) zum partiellen Zurückhalten hintereinander entlang der Querrichtung (DGS) verteilt sind.

11. Vorrichtung nach einem beliebigen der vorhergehenden Ansprüche, **dadurch gekennzeichnet, dass** die erste Innenfläche (11) eben ist und/oder die zweite Innenfläche (21) eben ist.

12. Verfahren zur Montage mindestens eines Kühlrohrs (T) an einem Turbomaschinengehäuse (19) mittels einer Halterungsvorrichtung (100) nach einem beliebigen der vorhergehenden Ansprüche,
**dadurch gekennzeichnet, dass** während eines ersten Schritts (E1) das mindestens eine Kühlrohr (T) um eine äußere Oberfläche (190) des Turbomaschinengehäuses (19) positioniert wird, während eines zweiten Schritts (E2) nach dem ersten Schritt (E1) die erste Stütze (1) der Halterungsvorrichtung (100) positioniert wird, um die linke Klaue (12) gegen die Linke des Kühlrohrs (T) anzuordnen, während eines dritten Schritts (E3) nach dem zweiten Schritt (E2) die erste Stütze (1) an einem ersten Bügel (BAM) des Gehäuses (19) befestigt wird, während eines vierten Schritts (E4) nach dem dritten Schritt (E3) die zweite Stütze (2) der Halterungsvorrichtung (100) gegen die erste Stütze (1) positioniert wird, um die rechte Klaue (22) gegen die Rechte des Kühlrohres (T) anzuordnen,
während eines fünften Schritts (E5) nach dem vierten Schritt (E4) die zweite Stütze (2) an einem zweiten Bügel (BAV) des Gehäuses (19) befestigt wird.

## Claims

1. A maintaining device (100) for maintaining at least one air jet cooling tube (T), the air jet cooling tube (T) being intended to cool an outer surface (190) of a turbomachine casing (19),
**characterized in that** the maintaining device (100) comprises
a first support (1), comprising a first inner face (11) turned towards the cooling tube (T) and at least one left tab (12) for partially retaining towards the left the cooling tube (T), located on a side of the first inner face (11) and fastened thereto,
a second support (2), comprising a second inner face (21) turned towards the cooling tube (T) and at least one right tab (22) for partially retaining towards the right the cooling tube (T), located on a side of the second inner face (21) and fastened thereto,
first fastening means (13) for fastening the first support (1) to a first flange (BAM) of the casing (19),
second fastening means (23) for fastening the second support (2) to a second flange (BAV) of the casing (19), the second fastening means (23) being distinct from the first fastening means (13).

2. The device according to claim 1, **characterized in that** the left tab (12) is offset from the right tab (22) along a longitudinal direction (DLT) of the cooling tube (T).

3. The device according to any one of the preceding claims, **characterized in that** the left tab (12) has a left free end portion (121) for supporting the cooling tube (T), wherein the left free end portion (121) for supporting the cooling tube (T) extends obliquely towards the right,
and/or the right tab (22) has a right free end portion (221) for supporting the cooling tube (T), wherein the right free end portion (221) for supporting the cooling tube (T) extends obliquely towards the left.

4. The device according to claim 3, **characterized in that** the left tab (12) comprises a first median portion (122), which is connected to the first inner face (11) and which occupies a first angular sector (ANG122), the first angular sector (ANG122) being disposed facing the first support (1),
the left free end portion (121) being connected to the first median portion (122) and forming a second angular sector (ANG121) around the air jet cooling tube (T), the second angular sector (ANG121) being intended to be disposed facing the outer surface (190) of the casing (19),
the right tab (22) comprises a second median portion (222), which is connected to the second inner face (21) and which occupies a third angular sector (ANG222), the third angular sector (ANG222) being disposed facing the second support (2),
the right free end portion (221) being connected to the second median portion (222) and forming a fourth angular sector (ANG221) around the air jet cooling tube (T), the fourth angular sector (ANG221) being intended to be disposed facing the outer surface (190) of the casing (19).

5. The device according to claim 4, **characterized in that** the left free end portion (121) of the left tab (12) and the right free end portion (122) of the right tab (22) each comprise a first radially inner free end, and the tube (T) comprising a radially inner free end, the radially inner free end of the tube (T) being located radially under the radially inner free end of each of the tabs (12, 22).

6. The device according to any one of the preceding claims, **characterized in that** the first support (1) is placed against the second support (2) along a longitudinal direction (DLT) of the cooling tube (T).

7. The device according to any one of the preceding claims, **characterized in that** the first support (1) comprises at least a first sliding portion (14), the second support (2) comprises at least a second sliding portion (24), able to slide against the first sliding portion (14) along a transverse direction (DGS) between the right and the left and/or along a longitudinal direction (DLT) of the cooling tube (T) up to a mounting position, in which the left tab (21) and the right tab (22) are located against respectively the left and the right of the cooling tube (T), the first and second fastening means (13, 23) making it possible to immobilize the first and second supports (1, 2) in the mounting position.

8. The device according to claim 7, **characterized in that** the first support (1) or the second support (2) comprises at least one sliding stop abutment (15, 25), configured to stop a sliding of the second support (2) or of the first support (1) along the transverse direction (DGS) in the mounting position, and/or the first support (1) or the second support (2) comprises at least another sliding stop abutment (16), configured to stop a sliding of the second support (2) or of the first support (1) along the longitudinal direction (DLT) of the cooling tube (T) in the mounting position.

9. The device according to any one of the preceding claims, **characterized in that** the first support (1) comprises a plurality of left tabs (12) for partially retaining towards the left respectively a plurality of cooling tubes (T),
the second support (2) comprises a plurality of right tabs (22) for partially retaining towards the right respectively the plurality of cooling tubes (T),
the plurality of cooling tubes (T) being distributed between the right and the left,
the left tabs (12) being distributed between the right and the left,
the right tabs (22) being distributed between the right and the left.

10. Device according to claim 9, **characterized in that** the left tabs (12) for partially retaining are distributed one behind the other along a transverse direction (DGS) between the right and the left and/or the right tabs (22) for partially retaining are distributed one behind the other along the transverse direction (DGS).

11. The device according to any one of the preceding claims, **characterized in that** the first inner face (11) is planar and/or the second inner face (21) is planar.

12. A method for mounting at least one cooling tube (T) on a turbomachine casing (19) using the maintaining device (100) according to any one of the preceding claims,
**characterized in that**
during a first step (E1), the at least one cooling tube (T) is positioned around an outer surface (190) of the turbomachine casing (19),
during a second step (E2) after the first step (E1), the first support (1) of the maintaining device (100) is positioned to place the left tab (12) against the left of the air jet cooling tube (T),
during a third step (E3) after the second step (E2), the first support (1) is fastened to a first flange (BAM) of the casing (19),
during a fourth step (E4) after the third step (E3), the second support (2) of the maintaining device (100) is positioned against the first support (1) to place the right tab (22) against the right of the air jet cooling tube (T),
during a fifth step (E5) after the fourth step (E4), the second support (2) is fastened to a second flange (BAV) of the casing (19).
